# EUROPEAN PATENT APPLICATION

(11) **EP 2 770 672 A2**
(43) Date of publication of application: **27.08.2014**
(21) Application number: 13170602.0
(22) Date of filing: 05.06.2013
(51) Int. Cl.: H04L 12/28, H04W 92/00, H04L 12/24

(54) **System of wireless communication, and method of management**

(30) Priority: 20.02.2013 TW 102105840
(71) Applicant: Arcadyan Technology Corp., Hsinchu 300 (TW)
(72) Inventor: Chang, David Yowchern, 300 Hsinchu (TW); Tsay, Wen-Jiunn, Hsin-Chu City (TW); Liang, Chen-Fang, 300 Hsinchu (TW); Liou, Guan-De, 300 Hsinchu (TW)
(74) Representative: Viering, Jentschura & Partner Patent- und Rechtsanwälte

(57) **Abstract**

Disclosure herein is related to a system of wireless communication, and a method of management. The system includes an outdoor wireless modem (40) and an indoor packet routing device (50) that are separately disposed at different positions. This structure renders a connection between a local-area network (52) and a wireless network backbone, which is constituted over a mobile communication network. The separation-type structure effectively protects the system from the interference caused by the wireless signals. This structure also simplifies the circuit architecture of the outdoor wireless modem (40) and makes it adapt to the outdoor environment. Further, the indoor packet routing device (50) incorporates a management module (553) which allows an operator to access the wireless modem (40) by passing the indoor packet routing device (50) over a remote network connection.

## Description

### BACKGROUND OF THE INVENTION

### 1. Field of the Invention

The present invention is related to a wireless communication system and its management, in particular to an outdoor wireless modem capable of performing signaling and management among a server, wireless station, and indoor network devices.

### 2. Description of Related Art

A general way for a client to get on Internet by a computer system is via a network modem installed at home. The network modem allows connected to Internet via an Asymmetric Digital Subscriber Line (ADSL) which is directed to telecommunication room. The "last mile" is a telecommunication term which means a telephone wiring between a switching machine in telecommunication room and the modem at client end. In general, wired network constitutes the backbone network or the last mile wiring.

The mentioned network modem at the client end is preferably an indoor network device which transfers the signals into digital signals over the last-mile line. The network line is served for the client-end computer. The network device also transfers the data in client-end computer to the analog signal carried over cable, and then delivered to a destination through the telecommunication room. As in operation, the network modem uses an RJ-11 standard telephone line to establish connection with the external host; to the internal device, an RJ-45 standard network cable is used to establish the connection to local area network.

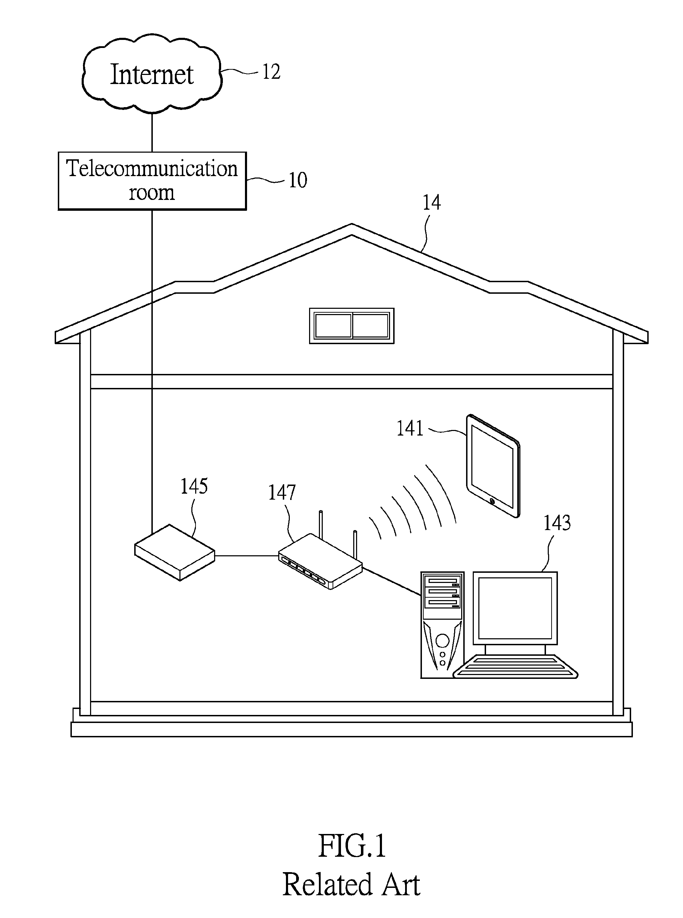

Reference is made to Fig. 1 depicting a schematic diagram of an environment with a modem.

A telecommunication room 10 and the various terminal devices located at home 14 are shown in the diagram. The terminal devices are such as mobile device and the computer equipment 141, 143. The computer equipment 141, 143 are capable of connecting to network. For example, the equipment at home 14 may establish connection to a network modem 145 through a network sharing machine 147. The network modem 145 is served for the home equipment to get on Internet 12 by passing the telecommunication room 10. In the related conventional art, the general network modem 145 at home 14 establishes connection to the telecommunication room 10 within external network over a cable such as telephone line. This connection is such as the so-called last mile.

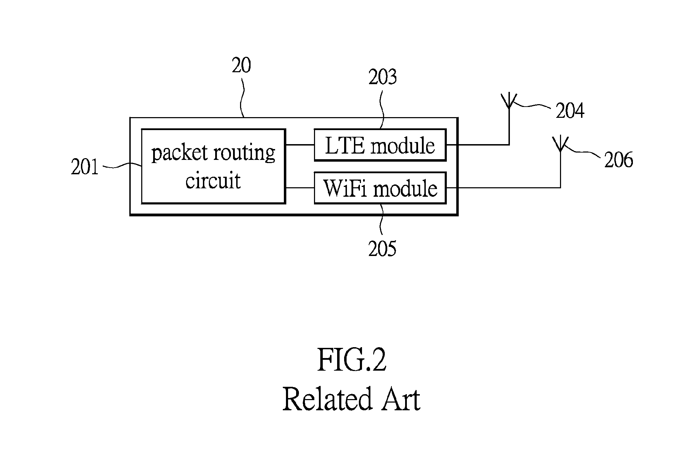

Next, Fig. 2 shows a schematic diagram of a wireless modem according to the conventional technology. The shown indoor wireless modem integrates an LTE (Long Term Evolution) module (203) and a wireless local area network (WiFi™) module (205).

The wireless modem 20 is such as the network equipment for performing packet routing. A packet routing circuit 201 is provided for processing the signals generated by the LTE module 203 or the WiFi module 205. The packet routing circuit 201 performs routing process for the signals carrying sources and destinations.

The LTE module 203 and the WiFi module 205 are two separate circuits for respectively processing two different communication protocols. The LTE module 203 conducts the fourth generation wireless communication signals (4G), including receiving and transmitting the LTE signals via an LTE antenna 204. The LTE module 203 is usually provided to establish the connection to mobile communication network in accordance with LTE communication protocol. The WiFi module 205 conducts the wireless network signals over a WiFi antenna 206 to receive and transmit the wireless network signals. Compared to the LTE communication service, the WiFi communication protocol is to serve the local-end network communication.

Therefore, the shown wireless modem 20 is functioned to process the signals delivered between two variant wireless networks (LTE, WiFi) by a packet routing circuit 201. It is noted that it's easily inducing electric interference since the two or more circuits used to process the radio waves are disposed within one device.

According to the above conventional technology, the traditional wireless modem 20 integrates both the WAN and LAN circuits. However, this integrated apparatus will not be able to avoid the interference caused by the wireless signals. Furthermore, the mentioned apparatus may result in maintenance difficulties and high failure rate if the apparatus with relatively complex design is disposed in public areas.

### SUMMARY OF THE INVENTION

Disclosure in accordance with the present invention is related to a wireless communication system and a method of managing the same. In an embodiment, provided is a separable wireless communication system having separable an outdoor wireless modem and an indoor packet routing device. Through this separable system, a local connection is established for linking to an external mobile communication network. This system may effectively avoid interference caused by existing internal and external wireless signals. The system also simplifies the design of the outdoor wireless modem for the purpose of easy outdoor maintenance.

In one embodiment of the present invention, the wireless communication system includes an indoor packet routing device for providing external connection for the devices within a local area network. The device is also forwarding the data packets between the local area network and the external network. Further, another one outdoor wireless modem installed at outdoor or other position is used to bridge a wireless WAN backbone with a local area network established by the indoor packet routing device.

The indoor packet routing device includes a communication module, which is used to establish the connection to local area network over a wired or wireless connection. Further, a modem interface module in the device is used to connect to the outdoor wireless modem, and one of the functions is to forward the exchanged signals there-between. The indoor packet routing device has a power unit, in which the power unit is used to manage the power supply within the indoor packet routing device, and also manage the power to the outdoor wireless modem according to one embodiment. For this purpose, the power signals may be carried over the cable bridging the outdoor wireless modem and the indoor packet routing device.

In one of the embodiments of the present invention, a wired network cable, a telephone cable, or a cable complied with homeplug power line is used to be a connection between a local area network interface module of the outdoor wireless modem and a modem interface module of the indoor packet routing device. Over the wired network cable, the power signals may be carried thereon for the indoor packet routing device to electrically charge the outdoor wireless modem.

Further in one embodiment, the indoor packet routing device has a management module of a management interface. This management module is provided for an administrator located in a local area network or a mobile communication network to access the indoor packet routing device through a web browser. By which, the administrator is allowed to access the outdoor wireless modem over the network.

In one another aspect of the present invention, provided is a method of management applied to the wireless communication system. In the method, a beginning step is to initialize a connection for the outdoor wireless modem to a mobile communication network, and another connection between the outdoor wireless modem and the indoor packet routing device. When the outdoor wireless modem initiates the connection to the mobile communication network, identification information is sent to a server. The connection will be established successfully when the server confirms the identification.

In the method of management, while the connections among the fixtures are established, a network node is activated to transfer a management instruction. The management instruction is sent from the wireless base station to the outdoor wireless modem, and then forwarded to the indoor packet routing device. A management module within the indoor packet routing device may interpret this management instruction, and then define a management port to establish a management channel with the outdoor wireless modem. Via this management channel, the management instruction can be transferred to the outdoor wireless modem, and allows to be executed.

### BRIEF DESCRIPTION OF THE DRAWINGS

Fig. 1 shows a schematic diagram of the traditional modem of the conventional technology;

Fig. 2 shows a schematic diagram of conventional wireless modem;

Fig. 3 shows a schematic diagram illustrating usage of the wireless communication system in one embodiment of the present invention;

Fig. 4 shows a circuit block illustrating a wireless communication system adopting an outdoor wireless modem of the embodiment of present invention;

Fig. 5 shows a circuit block illustrating a wireless communication system having an indoor packet routing device in one embodiment of the present invention;

Fig. 6 shows a flow chart describing a process of establishing initial connection in the wireless communication system in one embodiment of the present invention;

Fig. 7 a management process for a wireless communication system in one embodiment of the present invention;

Fig. 8 shows a flow chart describing a process for connection establishment and management for the wireless communication system according to one embodiment of the present invention.

### DETAILED DESCRIPTION OF THE PREFERRED EMBODIMENTS

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

The "last mile" is originally referred to connectivity between a telecommunication room of an Internet Service Provider (ISP) and the house of customers over a telephone line. In general, this connectivity is made by electric cable or optical fiber. Instead, when the communication technology is advanced to the fourth-generation mobile communication network (so called "4G"), the fourth-generation mobile communication network is therefore used to constitute a network backbone. Disclosure in the present invention is related to a wireless communication system and a method for managing the same. This management scheme is adapted to an outdoor wireless modem that is used to bridge a mobile communication network such as 3G, 4G or the like, and a local area network. The outdoor wireless modem is characterized that a first processor used to process signals over the mobile communication backbone and a second processor used to process network packets over the local area network are included in one device. The modem also performs bandwidth integration.

Since the any computer used at home in general is not limited to any position, the indoor network sharing machine is preferred to adopt a kind of omni-directional antenna. Otherwise, it is featured that the modem device used in the wireless communication system in accordance with the present invention includes an outdoor wireless modem, and its antenna is a kind of high-efficiency directional antenna because the position of its linked wireless base station is less changed. Therefore, under a suitable configuration, the antenna may be found directed to a preferred direction. According to the principal embodiment of the present invention, the system is configured to have an outdoor wireless modem and an indoor packet routing device separately.

In an exemplary embodiment, the present invention is applied to network signaling and management among a remote server, a wireless base station, and the indoor network facilities. In particular, the outdoor wireless modem is configured to establish a connection to the wireless base station within external network by a wireless communication technology. Further, the outdoor wireless modem is used to conduct signaling between WAN and LAN. The indoor network facilities may have a packet routing device which is charge of routing packets. The indoor packet routing device may connect to the outdoor wireless modem over a wired connection according to one embodiment of the invention. This framework of the configuration to the present invention is able to effectively reduce the interference among the various wireless signals. It is noted that, compared to the general outdoor facilities, the configuration of the invention provides much simplified circuitry which is suitable to operate maintenance of the outdoor facilities in a relatively harsh environment.

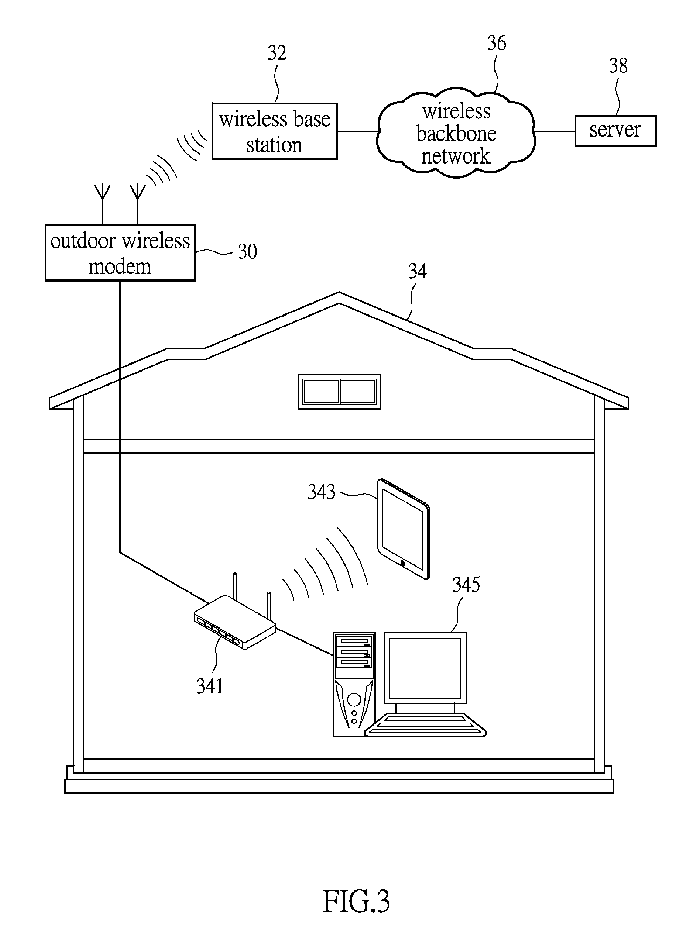

The outdoor wireless modem and its management method of the present invention constitute a simplified framework which allows operating maintenance and changing internal circuitry modules conveniently. The simplified framework effectively reduces failure rate and abates the signal interference. Reference is now made to Fig. 3 illustrating disposal of wireless communication system.

In practice, the outdoor wireless modem 30 may be the network facility installed outside a building 34, and served to bridge a local area network and an external wireless network. Reference is made to the figure, inside the building 34, a network sharing machine 341 used to render a limited coverage of network is provided. This network sharing machine 341 serves as a router, by which the local area network is established, and forwards packet signals generated by the shown computer devices 343, 345 to the external network. On the other hand, the outdoor wireless modem 30 transfers the signals over the external network to the signals over the local area network.

Inside the building 34, the outdoor wireless modem 30 is connected with the network sharing machine 341 via a cable such as the RJ-45 standard line. The network sharing machine 341 manages the network connectivity especially sharing the connections among the computer devices (343, 345) to external network over wired or wireless connection. The network sharing machine 341 also serves a gateway bridged to external network such as the server 38 via the outdoor wireless modem 30.

In a preferred way that the outdoor wireless modem 30 establishes link to the wireless base station 32 through a wireless communication technology, for example the LTE (Long Term Revolution), WiMAX (Worldwide Interoperability for Microwave Access), or the other types of, but not limited to, the fourth generation of mobile communication technologies. The network facilities inside the building 34 are used to bridge the network backbone, for example the shown server 38 located in the wireless backbone network 36, through the wireless base station 32 over the fourth generation communication. This scheme substitutes the "last mile" connectivity provided for the terminals to link the Internet.

Reference is now made to Fig. 3. The mentioned computer devices 343, 345 within the local area network inside the building 34 link to the wireless backbone network 36 and server 38 via the network sharing machine 341, the outdoor wireless modem 30, and the wireless base station 32. It is noted that the backbone network is constituted with the wireless network technology. In one further embodiment, the local area network may not be limited to the shown structure, but to other types of network topologies. It is important that the outdoor wireless modem 30 in accordance with the present invention serves as the facility to bridge the local area network and the external wireless backbone network 36.

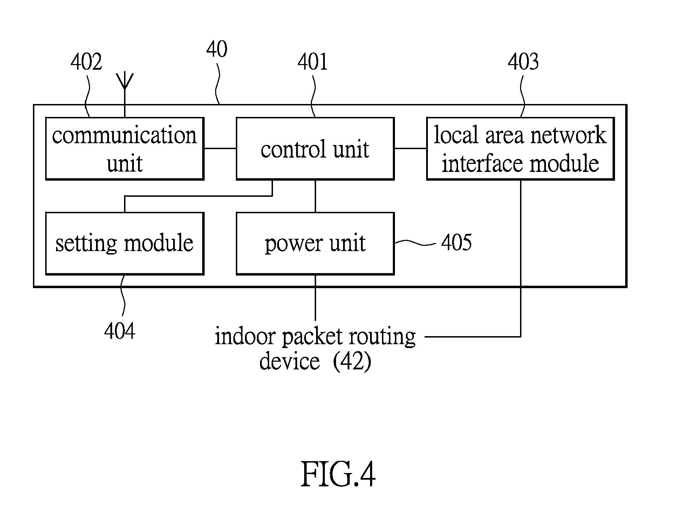

The schematic diagram of functional blocks illustrating one of the embodiments of outdoor wireless modem is shown in Fig. 4.

An outdoor wireless modem 40 is used to provide a service bridging the local area network to the external wireless communication network. A control unit 401 is included to conduct management of the circuit units and signals inside the device. The control unit 401 is electrically connected to the main circuits inside the outdoor wireless modem 40, including a communication unit 402 used to establish connection with external network; a local area network interface module 403 used to connect to local devices; a power unit 405 used to manage power supply to the device; and a setting module 404 used to manage operations of the outdoor wireless modem 40.

According to the present embodiment, the outdoor wireless modem 40 serves as the device bridging the mobile communication network. The outdoor wireless modem 40 includes the circuits respectively for processing the signals over the mobile communication network and over the local area network. The circuits are such as the baseband and radio-frequency circuits (not show in this figure) in compliance with a specific communication protocol. A local area network interface module 403 is also included to establish connection to the LAN, especially to the indoor packet routing device 42. For example, a wired network cable such as RJ-45 cable is adopted to make the link. Other types such as telephone cable with RJ-11 standard and homeplug power line may also be to solutions for the connectivity.

The embodiment also shows the outdoor wireless modem 40 may be the main device to establish the connection to the fourth generation of mobile communication network. The modem 40 may be equipped with a communication identity module (not shown) which is used to identify the subscriber. For example, the communication identity module is such as a subscriber identity module (SIM) generally installed in the mobile device.

As activating the modem 40, an operating system therein may initialize the communication identity module 507 and transmit the subscriber's identification information recorded in the module 507 to an Internet Service Provider (ISP). The ISP may be a telecommunication company which confirms the privilege of the communication identity module. Exemplarily, the modem 40 is activated to link the fourth generation of mobile communication network.

It is featured that in the present invention the connectivity between WAN and LAN is made by two different devices located at two different positions. In the exemplary embodiment, the two devices are such the outdoor wireless modem (40) and the indoor packet routing device (42). This communication system may effectively abate the wireless signal interference because the two individual devices are respectively in charge of the external and internal signaling. Furthermore, it is characterized that in one embodiment the outdoor wireless modem (40) may be electrically powered by the indoor packet routing device (42) over the cable there-between. The cable carries electricity to electrically charge the outdoor wireless modem (40) since the outdoor wireless modem may not directly connect to any power supply. The practical implementation may not be limited to the schematic diagram shown in the figure.

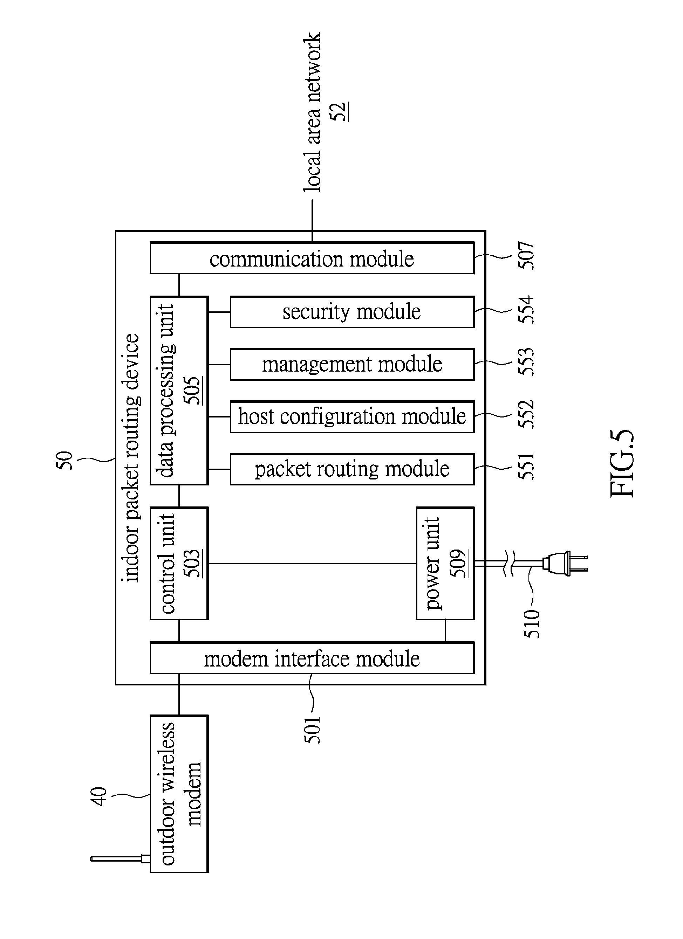

Fig. 5 now shows a schematic diagram having the functional blocks depicting the indoor packet routing device of the wireless communication system in accordance with the present invention.

It is preferred that the shown indoor packet routing device 50 is connected with the outdoor wireless modem 40 described in Fig. 4 over an RJ-45 or RJ-11 cable. The framework with the indoor device apart from the outside device effectively reduces the interference caused by wireless signals there-between.

The indoor packet routing device 50 is a network facility capable of expanding its coverage by sharing the network signals. The device 50 provides a service for the devices within LAN to bridge the external network. That is, the indoor packet routing device 50 may serve as a router which forwards the LAN signals to the external network, or vice versa forwards the WAN signals to the internal network.

The indoor packet routing device 50 is equipped with a modem interface module 501 which allows the device 50 to connect with the outdoor wireless modem 40, for example to the local area network interface module 403 (refer to Fig. 4) of the modem 40.

A data processing means is introduced in the indoor packet routing device 50. The data processing manner is such as incorporating a control unit 503 to operate the inner circuits of the device 50. For example, a data processing unit 505 is used to manage transmittal between the networks.

The control unit 503, electrically connected to the modem interface module 501, power unit 509 and data processing unit 505, manages the operations of the circuits within the device 50. The control unit 503 may serve routing packets according to the packet information retrieved by the data processing unit 505. This data processing unit 505 is a core circuit of the indoor packet routing device 50. The data processing unit 505 operates as an embedded operating environment providing the hardware or software-based functions when the device 50 starts up. The functions are such as data packets forwarding, LAN (52) IP addresses management, management of the outdoor wireless modem 40 made by the indoor packet routing device, and security process, which are performed by a packet routing module 551, a host configuration module 552, a management module 553 and a security module 554.

The data processing unit 505 may process the data packets over the LAN 52 through a communication module 507, and the packets may be made by the packet routing module 551. The data processing unit 505 identifies the packets including communication protocol, source, and destination, and forwards the packets to the destination. The indoor packet routing device 50 constitutes the LAN 52 by the communication module 507. The communication module 507 renders the various schemes to bridge the external network for the local area network 52.

The devices within the local area network 52 may connect with the indoor packet routing device 50 via wired or wireless connection. The indoor packet routing device 50 may serve as a server which is used to allocate IP addresses. The data processing unit 605 initiates a host configuration module 552 to conduct static or dynamic IP allocation that operates under an operating system of the indoor packet routing device 50. In which, a service of DHCP (Dynamic Host Configuration Protocol) may be provided for allocating the IP addresses to the indoor packet routing device 50 over wired or wireless connection.

The operating system for the indoor packet routing device 50 is operated to generate a management module 553, which is provided for the external devices to manage/configure this indoor packet routing device 50. In an exemplary embodiment, the management module 553 initiates a server in an earlier stage, and renders a management interface. An administrator may thereby through the management module 553 access the indoor packet routing device 50 from any computer system within the local area network 52. The modem interface module 501 is then served to access the outdoor wireless modem 40. Under this scheme, the management module 553 initiates a server for the administrator to access the server through a web browser, Telnet, or the specific program. After that, a user interface created by the server allows the administrator to perform configuration or management.

In one further embodiment, the wireless communication system of the present invention provides a function of remote management. For example, the administrator at a node of external network is able to perform remote management onto the outdoor wireless modem 40. However, the outdoor wireless modem 40 may not provide any tool or server to do any management. Characterized in the invention is that the management interface initiated from the indoor packet routing device 50 is provided for managing the outdoor wireless modem 40. That is, the administrator is allowed to access the outdoor wireless modem 40 of the wireless communication system from his computer over a wireless communication network. In the steps of the method, the outdoor wireless modem 40 is firstly connected to the indoor packet routing device 50. The management interface is created by the indoor packet routing device 50, and a management tool and user interface are also initiated for the administrator to configure the outdoor wireless modem 40.

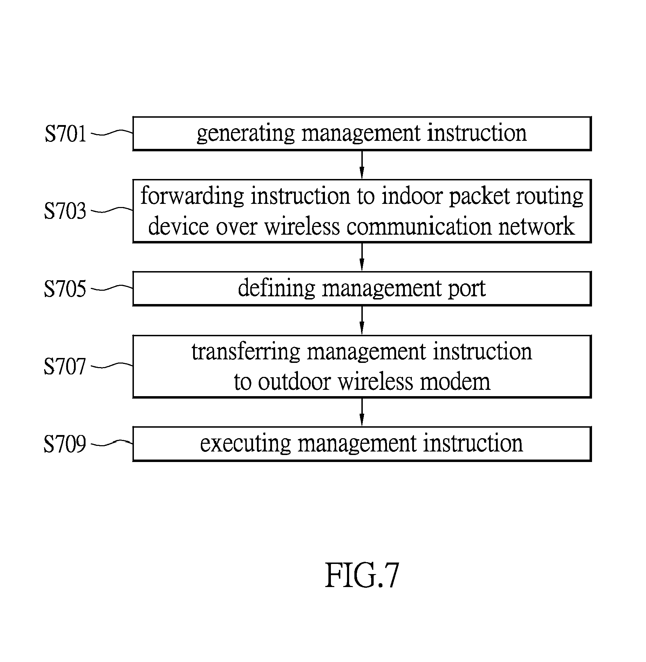

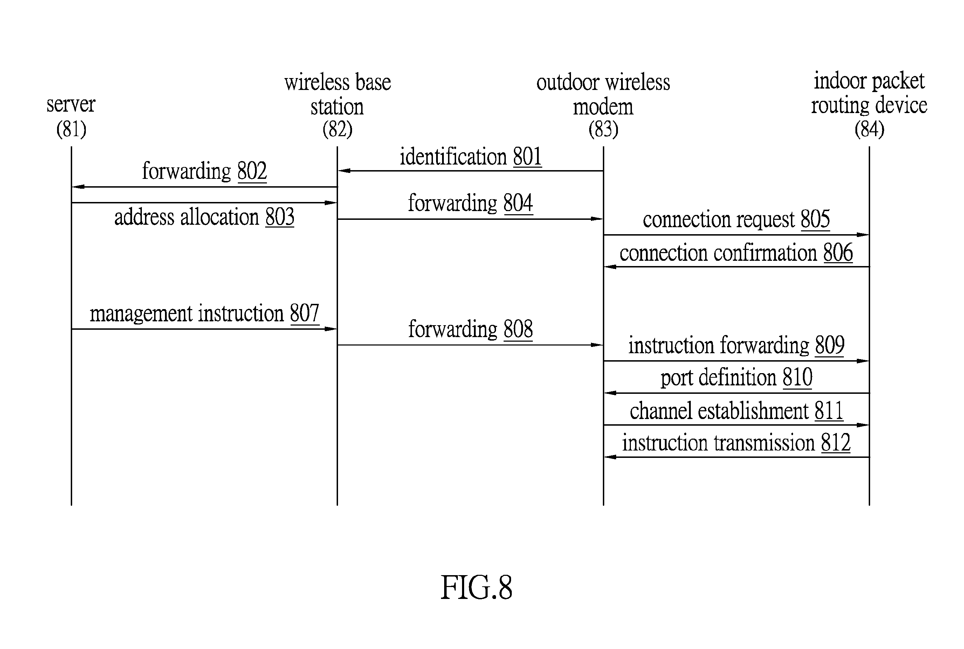

The management tool rendered in the management module 553 is provided to link the outdoor wireless modem 40 and to perform remote management. Some management items may be provided. For example, the items are such as the interactive components of any combination of buttons, options, and fields. The administrator is guided to perform the management and instructions. The management items are such as parameters of network service, adjustment of antenna frequency, security factors, power management, and operating data retrieval. The state of device 40 is acknowledged since the operating parameters may be obtained as accessing the outdoor wireless modem 40. Fig. 7 and Fig. 8 show the process of linking the indoor and outdoor devices in accordance with the present invention.

The data processing unit 505 initiates a security module 554 under the operating system. The security module 554 may be a security measures activated while the operating system boots up, for example a firewall, anti-virus software, or any scheme to verify the user. One of the objectives of the security measures is to protect the indoor packet routing device 50 and outdoor wireless modem 40 from improper access. The security module 554 determines if there is any improper access or malware as receiving the data analyzed by the data processing unit 505. Some embodiments appear that the hardware-based approach is provided for protect the indoor packet routing device 50 or outdoor wireless modem 40 from outside improper invasion.

In one embodiment, a preferred connection between the outdoor wireless modem 50 and the indoor packet routing device 50 is a wired network cable such as RJ-45 cable or RJ-11 telephone cable. Homeplug power line is one further standard the implement the connection.

Further, a power unit 509 which is used to manage power distribution over the indoor packet routing device 50 is provided. This power unit 509 may supports a technology of PoE (power over Ethernet). The indoor packet routing device 50 therefore transfers the electric power over a cable such as RJ-45 line based on the PoE technology. The power is supplied to the outdoor wireless modem 40 since the outdoor wireless modem 40 will not be powered by any other power source. It advantages the modem 40 not necessary to connect to any power socket or the like facility. Furthermore, the outdoor wireless modem 40 may ignore the circuits related to the power management because it is powered directly by the indoor packet routing device 50 according to the embodiment. This simplified design is much suitable to the installation at outdoor environment.

According to one of the embodiments, the invention of the present invention may be applicable to the system having the indoor packet routing device 50 simultaneously linked with one or more outdoor wireless modems 40. The indoor packet routing device 50 may have one or more ports to establish more connections. The circuits in the indoor packet routing device 50 may be capable of handling the signals sent from the many outdoor wireless modems 40. The indoor packet routing device 50 is able to power the many outdoor wireless modems 40 based on PoE at the same time. On the other hand, the invention may be applicable to the system having a plurality of indoor packet routing devices 50 connected to the outdoor wireless modem 40. The indoor packet routing device 50 may include one or more ports. The outdoor wireless modem 40 may include the circuit for handling the signals sent from the plurality of indoor packet routing devices 50.

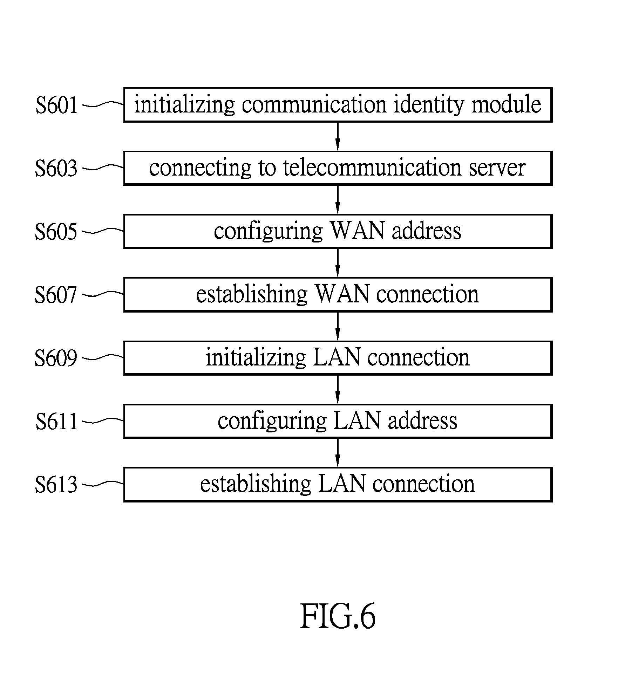

The flow chart shown in Fig. 6 depicts a process of initializing the connection for the wireless communication system according to one of the embodiments.

While the separation-type wireless communication system including the separable outdoor wireless modem and indoor packet routing device is constituted, the initialization thereof may firstly establish the connection to the mobile communication network. In step S601, the outdoor wireless modem may initialize the communication identity module which is used to identify the subscriber. Then the outdoor wireless modem is activated to establish the connection to the mobile communication network. The mobile communication network is such as the fourth generation mobile communication network. In step S603, the connection to the telecommunication server is established. In step S605, the outdoor wireless modem will be allocated with an IP address over the WAN, for example the public IP address for the outdoor wireless modem. In step S607, the connection between the wireless communication system and WAN is established.

Next, in step S609, the connection to the local area network is also established. When the indoor packet routing device is activated, the connections to the devices within the local area network are also initialized. For example, such as step S611, the network addresses related to the local area network are created. The addresses within LAN are such as the private addresses for establishing the LAN, as in step S613.

The initialization process shown in Fig. 6 is to establish the wireless communication system. It is featured that the separable outdoor wireless modem and indoor packet routing device respectively establish the connections to WAN and LAN. Through signal conversion and routing function operated in the separation-type system, the devices within the local area network may be bridged to the wireless WAN backbone established under a mobile communication network. The mobile communication network is preferably made by LTE, WiMAX, or the other types of fourth generation mobile communication network.

Next, a management method for the wireless communication system in accordance with the present invention is referred to the flow chart in Fig. 7. When the administrator desires to configure the outdoor wireless modem from a local area network, the management interface provided by the indoor packet routing device, initiated by the management module, renders an environment to maintain and configure the outdoor wireless modem. That means the management interface has established links to the various functions made by the outdoor wireless modem. It is allowed that the administrator remotely operates the management tool over the management interface, including accessing the outdoor wireless modem to generate the management instruction. The instruction is related to network configuration, maintenance, power check, or retrieval of history of device's operation. Through this management interface, the administrator is also allowed to configure the indoor packet routing device.

In one further embodiment, if the administrator operates outdoors, he is still allowed to enter the management interface for accessing the outdoor wireless modem via the indoor packet routing device from the outdoor wireless network. The outdoor wireless modem is then at a maintenance mode. Through the management process, the system may effectively isolate the outdoor wireless modem from improper access.

In Fig. 7, such as step S701, the administrator issues a management instruction generated through a web page or a program to the outdoor wireless modem. A management module of the indoor packet routing device guides the administrator through a user interface to generate this management instruction. Such as step S703, the management instruction may be delivered to the indoor packet routing device from the outdoor wireless modem over the wireless communication network. In the meantime, this outdoor wireless modem operates as a bridge which is transparent to the remote administrator. The administrator merely conducts the administration by his knowledge of establishing the connection with the indoor packet routing device.

Next, such as S705, the management instruction is processed by the management module of the indoor packet routing device. The management module then defines a management port with the outdoor wireless modem to be a channel for transmitting the management instruction. In step S707, the management module transmits the management instruction to the outdoor wireless modem according to the address of the management port. In step S709, a setting module in the outdoor wireless modem receives and executes the management instruction.

In an exemplary example, the maintenance staff may use the maintenance software tool to make connection with the outdoor wireless modem and perform the maintenance. For example, the outdoor wireless modem may be provided and installed by the service provider such as a telecommunication company. The software tool is such as the well-known telnet, ssh, or any user interface made by the other software. Through this connection to the outdoor wireless modem, the management instruction is instructed to perform repair, upgrading and test. According to the current disclosure, the management module installed in the indoor packet routing device may interpret the management instruction to the instructions acknowledgeable to the outdoor wireless modem. Then the outdoor wireless modem responds to the instruction. In a proper order, the signals pass through the indoor packet routing device to the outdoor wireless modem over the wireless communication network, and the remote administrator receives the signals.

Reference is made to Fig. 8 illustrating the process of connecting among the server 81, wireless base station 82, outdoor wireless modem 83, and indoor packet routing device 84 in the wireless communication system of the present invention.

The server 81 may indicate a network node within the mobile communication network. For example, the network node is such as a host located in the telecommunication room. The wireless base station 82 is a relay station bridging the wireless communication system to the mobile communication network. The outdoor wireless modem 83 and the indoor packet routing device 84 are respectively two different devices located in the wireless communication system, and both devices are equipped with wired network cable, telephone cable, or homeplug power line, which is used to establish the connection there-between.

When the system starts up, the outdoor wireless modem 83 firstly activates a connection to the mobile communication network. Identification information (801) such as the communication identity module made by SIM is issued. The identification information (801) may be forwarded to the server 81 via the wireless base station 82.

After the server 91 confirms the identification information, an address (903) is allocated and sent (804) to the outdoor wireless modem 83 via the wireless base station 82.

Next, an initialization process starts within the local connections. In which, the outdoor wireless modem 83 is connected with the indoor packet routing device 84. The establishment of the connection is made through some steps of exchanging response and acknowledgement packets. For example, the outdoor wireless modem 83 transmits a connection request (805) to the indoor packet routing device 84. When the indoor packet routing device 84 confirms the connection, the device 84 replies a connection acknowledgement (806) to the outdoor wireless modem 83.

While the devices complete the initialization, the administrator may issue management instruction (807) made by a web page or specific program from at the server 81 or any node. This management instruction (807) is carried over the mobile communication network. The wireless base station 82 forwards (808) the instruction (807) to the outdoor wireless modem 83. It is noted that even though the management instruction is directed to the outdoor wireless modem 83, the outdoor wireless modem 83 is configured to have a setting module, referring to 404 in Fig. 4, to receive and execute the management instruction. Therefore the setting module (404) of the outdoor wireless modem 83 serves to receive and perform the management instruction. The management instruction may be related to the functions specified to the modem 83. It is also noted that the management instruction is transmitted (809) with a type of network packets for the outdoor wireless modem 83 to the indoor packet routing device 84, and then forwarded to the outdoor wireless modem 83.

In accordance with the embodiment of the present invention, the indoor packet routing device 84 includes a management module which is allowed to interpret the management instruction created by the administrator end. If the device 84 confirms the management instruction is specified to a specific function of the outdoor wireless modem 83, the management module may firstly define a management port (810), and thereby establish a management channel (811) directed to the outdoor wireless modem 83. After that, the management module in the indoor packet routing device 84 delivers the management instruction (812) through the management channel. In particular, the management channel is used to deliver the instructions after the interpreting process. The outdoor wireless modem 83 then executes the instructions.

To sum up, the wireless communication system in accordance with one embodiment of the present invention is configured to provide a separation-type architecture including an outdoor wireless modem and an indoor packet routing device. This separation-type wireless communication system effectively abates the interference among the wireless signals in addition to establishing a connection between the mobile communication network and the local area network. This system simplifies circuits within the outdoor wireless modem, and therefore easy to maintain and suitable to the outdoor environment.

The outdoor wireless modem is preferably the device bridging the local area network and the outdoor wireless network. The computer devices within the local area network are allowed to connect with the wide area network based on the wireless network. It is noted that in one embodiment two processors are installed in one baseband circuit respectively for processing the wireless network signals and the LAN packets. An embedded operating system then performs signal conversion and routing. The simplified architecture advantages the system being suitable for outdoor installation since it effectively reduces the failure rate.

It is intended that the specification and depicted embodiment be considered exemplary only, with a true scope and spirit of the invention being indicated by the broad meaning of the following claims.

## Claims

1. A management method of a wireless communication system, wherein the wireless communication system includes interconnected an outdoor wireless modem (40) and an indoor packet routing device (50), comprising:
initializing a connection between the outdoor wireless modem (40) and a mobile communication network, and another connection between the outdoor wireless modem (40) and the indoor packet routing device (50);
receiving a management instruction which is transmitted through a wireless base station (32), and transferred to the indoor packet routing device (50) by the outdoor wireless modem (40);
a management module (553) of the indoor packet routing device (50) interpreting the management instruction and verifying the management instruction which is to configure one function of the outdoor wireless modem (40);
defining a management port by the management module (553), and accordingly establishing a management channel to the outdoor wireless modem (40); and
through the management channel, transmitting the management instruction to the outdoor wireless modem (40), and the outdoor wireless modem (40) performs the management instruction.

2. The method of claim 1, wherein the management instruction is generated by a remote network node, and transmitted to the wireless communication system through the mobile communication network.

3. The method of claim 1, wherein the management module is provided to associate with one or more management tools for every management item in the outdoor wireless modem (40).

4. The method of claim 3, wherein the management module initiates a management interface so as to provide an administrator to perform remote operation and generate the management instruction.

5. The method of claim 4, wherein the outdoor wireless modem includes a setting module (404) which is used to receive the management instruction and perform the management instruction.

6. The method of claim 1, wherein the step of initializing the outdoor wireless modem (40) for connecting with the mobile communication network includes:
the outdoor wireless modem (40) initiating a connection to the mobile communication network, and issuing an identification information to a server (38); and
after the server verifying identification information, allocating an IP address to the outdoor wireless modem (40).

7. The method of claim 6, wherein the step of the outdoor wireless modem (40) connected to indoor packet routing device (50) includes:
the outdoor wireless modem (40) transmitting a connection request to the indoor packet routing device (50); and
after the indoor packet routing device (50) verifying the connection, issuing a connection acknowledgement back to the outdoor wireless modem (40).

8. The method of claim 6, wherein the outdoor wireless modem (40) activates function of processing wireless signal by a communication identity module.

9. A wireless communication system performing the management method according to claim 1, wherein the system includes:
an outdoor wireless modem (40), bridging a wireless WAN backbone and a LAN, wherein the WAN is based on a mobile communication network, and the outdoor wireless modem (40) is equipped with circuits of processing signals over the mobile communication network and the LAN respectively, further includes a local area network interface module (403) for connecting to the LAN; and
an indoor packet routing device (50), connected to the outdoor wireless modem (40), used to render a connection for devices within the local area network to an external network, wherein the indoor packet routing device (50) forwards data packets between the local area network and the external network.

10. The wireless communication system of claim 9, wherein the outdoor wireless modem (40) and the indoor packet routing device (50) are connected over a wired network cable, a telephone cable, or a HomePlug powerline cable.

11. The wireless communication system of claim 10, wherein the wired network cable carries a power signal, and the indoor packet routing device is used to electrically charge the outdoor wireless modem (40).

12. The wireless communication system of claim 11, wherein the indoor packet routing device (50) includes a power unit (509) which is used to manage power supply for the indoor packet routing device (50) to supply power to the outdoor wireless modem (40).

13. The wireless communication system of claim 10, wherein the outdoor wireless modem (40) is able to connect with multiple indoor packet routing devices (50); or the indoor packet routing device (50) is able to connect with multiple outdoor wireless modems (40).

14. The wireless communication system of claim 9, wherein the indoor packet routing device (50) includes a host configuration module (552) which is used to allocate network addresses to devices within the local area network.

15. The wireless communication system of claim 9, wherein the indoor packet routing device (50) includes a management module (553) which is used to manage the outdoor wireless modem (40) by means of providing an administrator of the mobile communication network to access the indoor packet routing device (50) through a web browser.
